# EUROPÄISCHE PATENTSCHRIFT

(11) **EP 0 283 489 B1**
(45) Veröffentlichungstag und Bekanntmachung des Hinweises auf die Patenterteilung: **03.02.1993**
(21) Anmeldenummer: 87906044.0
(22) Anmeldetag: 16.09.1987
(51) Int. Cl.: D21C 9/06, B01D 33/04

(54) **EINRICHTUNG ZUR BEHANDLUNG EINER MATERIALBAHN**
APPARATUS FOR TREATING A MATERIAL SHEET
INSTALLATION POUR LE TRAITEMENT D'UN MATERIAU SOUS FORME DE FEUILLE

(30) Priorität: 17.09.1986 AT 2488/86
(43) Veröffentlichungstag der Anmeldung: 28.09.1988
(73) Patentinhaber: MASCHINENFABRIK ANDRITZ AKTIENGESELLSCHAFT, A-8045 Graz (AT)
(72) Erfinder: SBASCHNIGG, Johann, A-8045 Graz (AT); RESCH, Franz, A-8045 Graz (AT)
(74) Vertreter: Collin, Hans, Dipl.-Ing. Dr.
(86) Internationale Anmeldenummer: AT8700053
(87) Internationale Veröffentlichungsnummer: WO8802045

(56) Entgegenhaltungen:
- WO-A-79/00309
- DE-A- 1 801 906
- DE-A- 1 924 693
- DE-A- 2 365 068
- DE-A- 3 423 701
- GB-A- 2 115 714
- US-A- 2 356 285

## Beschreibung

Die Erfindung betrifft eine Einrichtung zur Behandlung einer zwischen mindestens zwei endlosen Siebbändern od.dgl. geführten Materialbahn, zweckmäßig zur Verdrängungswäsche eines Filterkuchens bzw. zum Waschen von Faserstoffen, wobei das Material zwischen den Bändern an, zweckmäßig in gleicher Höhe, in der Bewegungsrichtung der Bänder hintereinander, im Abstand voneinander nur oberhalb der Bänder angeordneten, das obere Band kontaktierenden, der Zufuhr einer Behandlungsflüssigkeit unter Druck dienenden, feststehenden, mit Öffnungen für die Behandlungsflüssigkeit versehenen Behältern entlanggeleitet ist und wobei das Material nach Passieren der Behälter zu Preßwalzen befördert ist.

Bekanntlich wird derzeit das Waschen von Zellstoff und Halbzellstoff auf Trommelwäschern und Langsiebwaschmaschinen durchgeführt. Bei diesen Systemen ist nachteilig, daß bei Trommelwäschern eine Serienschaltung von mehreren Aggregaten notwendig ist und daß bei Langsiebwäschern der Platzbedarf groß ist. Beide Systeme arbeiten mit Vakuum oder Druckluft, wodurch die Investition für die Installation und der Energiebedarf für den Betrieb hoch ist. Der Auswaschgrad ist zwar ziemlich gut, doch ist der Frischwasserbedarf für die Wäsche durch den Verdünnungsfaktor, der z.B. im Bereich von 1 bis 3,5 liegt, verhältnismäßig hoch. Die Systeme arbeiten mit hintereinander im Gegenstrom geschalteten Verdrängungswaschzonen. Auch Schwerkraftwäscher sind bereits vorgeschlagen worden. Auch bei der Pulpe- bzw. Zellstoffwascheinrichtung nach der US-A 2 356 285 wird an der Bandunterseite Vakuum angelegt. Dies bedeutet zunächst wieder einen hohen Energieaufwand sowie wegen der erforderlichen besonderen Abdichtungen im Bereich der Bandunterseite aufwendige Vorkehrungen bezüglich der Einrichtungsteile. Dabei wird die Einrichtung noch zusätzlich dadurch verkompliziert, daß die oberhalb der Siebbänder angeordneten Behälter für die Waschflüssigkeit ohne Boden ausgeführt und demgemäß auch besondere Dichtungen gegenüber dem oberen Band vorzusehen waren.

Unter anderem können die vorgeschilderten Nachteile gemäß der Erfindung weitgehend vermieden werden, wenn zweckmäßig für eine Gegenstrombehandlung, vorteilhaft eine Gegenstramverdrängungswäsche, die Bänder mit der dazwischen befindlichen Materialbahn in zumindest zwei nebeneinander befindlichen Schleifen durch mehrere Zonen geführt sind, in denen den Bändern und dem Material aus mindestens zwei nur oberhalb dieser Bänder angeordneten, feststehenden Druckbehältern mittels mit Öffnungen versehenen, das obere Band, insbesondere bis zum oberen Behälterrand, kontaktierenden Seitenwänden, die mittels ihrer Außenflächen die aus Bändern und dazwischen befindlichem Material gebildeten Schleifen führen und die im Bereich des Bandkontakts Abströmöffnungen aufweisen, von oben die Behandlungsflüssigkeit durch diese Seitenwände unter Druck zugeleitet ist und in denen unterhalb sowie außerhalb des unteren Bandes dieser mittels der Seitenwand-Außenflächen geführten Mehrfachschleifen im wesentlichen normaler Luftdruck bzw. Atmosphärendruck bzw. Umgebungsdruck herrscht, und in welchen Zonen hierauf Bänder und Material durch im Abstand von den mindestens zwei Druckbehältern und unmittelbar zwischen diesen sowie getrennt von diesen gelagerte pressende Umlenkwalzen bzw. Preßwalzen od.dgl. gebildete Auspreßzonen geführt sind.

Erfindungsgemäß werden dadurch, daß die erforderliche Druckdifferenz mit Hilfe der Zuführung der Behandlungsflüssigkeit unter Druck von oben (Druckbehälter!), das Vorsehen von Atmosphärendruck unterhalb der Bänder sowie durch Anordnung von Wänden in den oberhalb der Bänder angeordneten Druckbehältern, die nur im Bereich des Bandkontakts Abströmöffnungen für die Zufuhr der Behandlungsflüssigkeit zu den Bändern und zur Materialbahn aufweisen (also den Druck der Behandlungsflüssigkeit aufrechterhalten lassen) erzeugt wird, alle die vorerwähnten Nachteile der Einrichtung nach der US-A-2 356 285 vermieden. Dazu kommt noch der Vorteil bei der Einrichtung gemaß der Erfindung, daß die Druckbehälter und die Preßvorrichtungen getrennt voneinander gelagert sind, wogegen nach der US-A-2 356 285 die fraglichen Behälter auf Preßwalzen abgestützt sind. Im Gegensatz zu dieser bekannten Ausbildung könnten daher erfindungsgemäß die Behandlungsbehälter unabhängig von den Preßwalzen in der Lage bzw. Stellung zu den Bändern verstellt werden, wogegen bei der vorerwähnten bekannten Einrichtung eine fixe Kopplung vorhanden ist. Erfindungsgemäß ist demnach eine bessere und unabhängigere Dosierung der Behandlung bzw. der Verdrängungswäsche bzw. Materialpressung möglich, so daß sehr gute Behanglungsresultate bei verhältnismäßig kurzen Anlagenbaulängen erzielbar sind. Die Resultate lassen sich noch weiter verbessern, wenn - was fakultativ angegeben ist - die Bänder auch mit Öffnungen versehene Seitenwände der Druckbehälter kontaktieren.

Durch die erfindungsgemäße Hintereinanderschaltung von besonders gestalteten Druck- und Auspreßzonen lassen sich derart gute Auswaschresultate u.dgl. auf relativ kurzen Distanzen erzielen, daß damit zusätzlich die Baulänge der Anlage gegenüber den bekannten Konstruktionen beachtlich verringert werden kann, ohne den Wascheffekt od.dgl. herabzusetzen. Wird mit einer unter Druck statt unter Vakuum stehenden Behandlungsflüssigkeit gearbeitet, so stellt sich zusätzlich eine ins Gewicht fallende Energieeinsparung ein. Der Einsatz frischer Behandlungsflüssigkeit wird erfindungsgemäß außerdem beachtlich reduziert.

Besonders kurz läßt sich die Anlage ausführen, wenn die Bänder mit dem dazwischen befindlichen Material durch die Zonen mit Druck von oben und normalem Luftdruck von unten in etwa horizontalen Schleifen, Schlingen, Schlaufen bzw. Wellen geführt sind, wobei zumindest zwei dieser Schleifen od.dgl . einzeln um zumindest zwei feststehende Druckbehälter von unten und über zumindest eine Umlenkwalze, Preßwalze, durch Preßnips od.dgl. geführt ist bzw. sind, die zwischen diesen Behältern angeordnet sind. Sehr kurz kann die Anlage werden, wenn die Bänder mit dem Material an den, beispielsweise konvex nach außen gebogenen, Seitenwänden von tiefen Druckbehältern entlanggeführt sind, die in diesem Bereich Öffnungen für den Austritt der unter Druck stehenden Behandlungsflüssigkeit aufweisen. Es kann aber vor allem dann, wenn eine geringe Bauhöhe bei einer doch ins Gewicht fallenden Verkürzung der Anlage angestrebt wird, die Ausführung auch so getroffen werden, daß die Bänder mit dem Material mittels der gesamten in der Bewegungsrichtung der Bänder verlaufenden, beispielsweise konvex, nach unten gekrümmten, den Behälterboden und die Behälterseitenwände bildenden Wand feststehender Druckbehälter mit im Verhältnis zur in Richtung der Band- bzw. Materialbewegung gemessenen Breite geringer Höhe geführt sind, wobei diese gesamte Wand in diesem Führungsbereich Öffnungen für den Austritt der unter Druck stehenden Behandlungsflüssigkeit aufweist.

Gemäß der weiteren Ausgestaltung der Erfindung ergibt sich eine besonders günstige praktische Ausführungsform, wenn der Querschnitt der in gleicher Höhe hintereinander angeordneten feststehenden Druckbehälter, insbesondere stetig, von oben nach unten abnimmt, vorteilhaft die Behälterwände die Gestalt eines an der Schneide abgeschnittenen Keiles, gegebenenfalls mit gekrümmten Flanken, aufweisen. Um die Zufuhr der Behannlungsflüssigkeit besonders in den Griff zu bekommen, haben die Druckbehälter vorteilhaft etwa in der Mitte geteilte Innenräume und sind im untersten, insbesondere flachen, Teil geschlossen ausgebildet. Es ist aber beispielsweise auch denkbar, daß die Druckbehälter nur innerhalb ihrer Flanken Räume für die Behandlungsflüssigkeit aufweisen, wobei diese Flanken die Öffnungen für diese Behandlungsflüssigkeit besitzen. Hiebei ist der Kernraum der Behälter unter Umständen vollständig frei von Behandlungsflüssigkeit.

Für die Praxis kann es besonders zweckmäßig sein und der Behandlungserfolg besonders in die Höhe getrieben werden, wenn die Bänder mit dem zwischen ihnen befindlichen Material im Bereich der Schleifen-, Schlingen- bzw. Wellenmaxima und bzw. oder im Bereich deren Minima um, gegebenenfalls angetriebene, pressende Umlenkwalzen, Preßwalzen od.dgl. bzw. durch, gegebenenfalls angetriebene, Preßnips od.dgl. geführt sind. Die Anlage wird vorzugsweise komplettiert, wenn unterhalb der Seitenwände der Druckbehälter, insbesondere getrennte, Auffangwannen od.dgl. für Behandlungsflüssigkeit und Waschflüssigkeit usw. angeordnet sind.

Als endlose, durchlässige Bänder sind z.B. perforierte Stahlbänder oder Kunststoffsiebbänder vorgesehen, deren Enden in entsprechender Weise verbunden sind, z.B. durch Schweißen, Weben oder Stecken.

Durch die erfindungsgemäße Anordnung wird eine wesentlich bessere und wesentlich besser kontrollierbare Behandlung des Materials mit dem Behandlungsmedium erzielt als bisher. Als Folge davon ergibt sich einerseits, wie oben erwähnt, eine bessere Ausnützung des jeweiligen Behandlungsmediums, dadurch die Möglichkeit einer wesentlich kompakteren Anlagenausführung, z.B. in Form eines Behandlungsmoduls in einer herkömmlichen Anlage. Außerdem wird eine wesentliche Verringerung der Bandreibung an Flanken und Böden der Behandlungsbehälter erzielt. Mit der erfindungsgemäßen Anordnung ergeben sich weiterhin die Möglichkeiten der Kombination verschiedener Behandlungsweisen auf einer Anlage, wobei eine schärfere Trennung der einzelnen Behandlungszonen als bisher möglich ist, sowie der Regelung der Materialkonsistenz vor der Behandlung. Bekanntlich ist eine Behandlung umso wirksamer, je weniger Flüssigkeit im zu behandelnden Material mitgeführt wird, d.h. der Wirkungsgrad steigt mit der Konsistenz. Schließlich ergibt sich die Möglichkeit zu einer automatischen Temperatur- und/oder pH-Kontrolle, insbesondere vor Preßnips.

Mit den vorbekannten Konstruktionen sind die zuvor angeführten Effekte nicht erzielbar. So werden gemäß der WO-A-79/00309 die Bänder und das Material statt um feststehende, sie führende Behälter um rotierende Trammeln geleitet, die noch dazu gestaffelt zueinander angeordnet sind. Die unter diesen Trommeln angeordneten Behälter sind offenbar mit Waschflüssigkeit soweit gefüllt, daß die Trommeln mit den Bändern und dem Material im Betrieb in diese Flüssigkeit eintauchen, so daß die erfindungsgemäße Vorschrift nicht eingenalten wird, daß "unterhalb des unteren Bandes ein im wesentlichen normaler Luft- bzw. Atmosphärendruck" herrschen soll. Der Durchtritt eines Behandlungsmediums durch Siebbänder und Materialbahn und dessen darauf folgende Auspressung aus der Materialbahn im Bereich des Behälterkontakts wird daher beim Bekannten behindert. Es lassen sich somit beim Bekannten nicht die erfindungsgemäßen Wascheffekte bei einer verhältnismäßig geringen Maschinenbaulänge erreichen. Im übrigen bringt der Kontakt von Siebbändern mit der dazwischen befindlichen Materialbahn mit feststehenden Behälterseitenwänden einen zusätzlichen Auspreßeffekt.

Gemäß der GB-A-2 115 714 werden die Bänder und das Material durch einen einzigen mit Behanglungsflüssigkeit gefüllten Behälter oder nur am Boden eines einzigen Behälters vorbeigeleitet. Wände, insbesondere auch Seitenwände, von mindestens zwei im Abstand voneinander angeordneten Behandlungsbehältern dienen somit keineswegs der Führung der Bänder und des Materials, wobei noch dazu beim Bekannten der Bandführung dienende Preßwalzen zwischen zwei oder mehr Behältern naturgemäß nicht vorhanden sind. Demnach fehlen auch zwischen Druckbehältern getrennt von diesen gelagerte Preßwalzen. Im übrigen besitzt der Behälter nach dieser Vorveröffentlichung keine Öffnungen an den Seitenwänden. Somit lassen sich wieder nicht die erfindungsgemäßen Wascheffekte auf verhältnismäßig kurzer Einrichtungslänge zustandebringen. Eine Kombination des Gegenstandes der GB-A-2 115 714 mit dem Gegenstand der WO-A-79/00309 liegt einerseits nicht nahe, da es sich um grundverschiedene Anlagen-Typen handelt, nämlich im ersten Fall ein Typ mit rotierenden zylindrischen Behältern, im zweiten Fall ein Typ mit schiffchenförmigem fetstehenden Behälter. Andererseits ergibt eine solche nicht naheliegende Kombination keineswegs die Erfindung: Setzt man nämlich den Behälter nach der GB-A-2 115 714 in die Schleifen nach der WO-A-79/00309, die ja durch flüssigkeitsgefüllte Behälter geführt sind, so herrscht unterhalb des jeweils unteren Siebbandes im Behälterbereich keineswegs der erfindungsgemäß vorgeschriebene Atmosphärendruck od.dgl. Der Behandlungseffekt ist somit ein anderer, insbesondere reduzierter. Außerdem fehlt der eindeutige Hinweis auf das obere Band (und damit das Material und das untere Band) führende Behälterwände.

Zusammenfassend ist zu unterstreichen, daß die Siebbänder mit dem dazwischen befindlichen Material erfindungsgemäß nicht nur an mit Öffnungen versehenen Wänden der Behälter bei besonders vorgegebenen Druckverhältnissen bis zu deren oberen Rand hin entlanggeleitet, sondern durch die Außenflächen dieser Wände auch besonders weitgehend geführt werden, in besonderer Weise übrigens dann, wenn diese konvex nach außen gebogen sind. Damit kommt nicht nur ein sich über eine lange Strecke ausdehnender Führungseffekt, sondern auch ein Auspreßeffekt zustande, der durch die zwischen den Behältern angeordneten Preßwalzen sowie durch die gezielt vorgeschriebene Druckdifferenz zusätzlich wesentlich verstärkt wird.

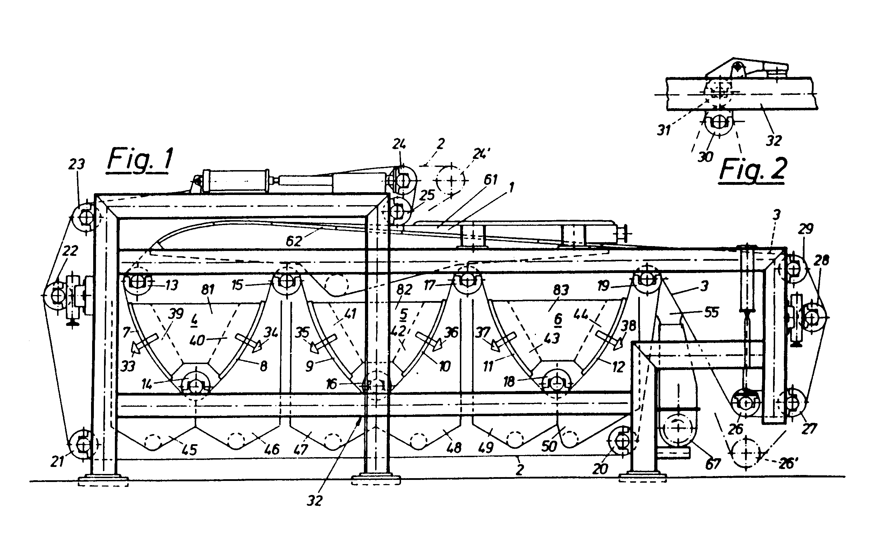

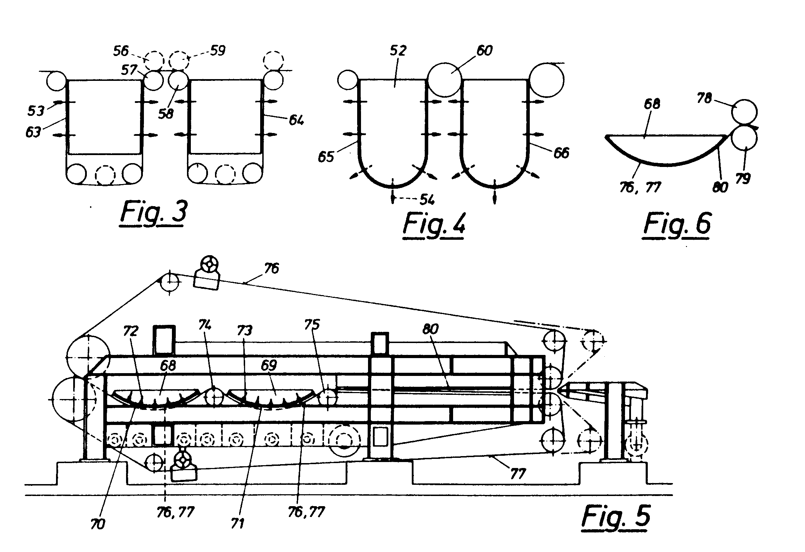

An Hand der Zeichnung werden Ausführungsbeispiele der Erfindung beschrieben. Es zeigen die Fig. 1, 3 und 4 Anlagen nach der Erfindung mit tiefen Behandlungsbehältern schematisch in Seitenansicht, wobei die Fig. 3 und 4 nur Teilseitenansichten sind, die Fig. 2 eine Modifikation der Ausbildung nach Fig. 1 im Detail, die Fig. 5 eine Maschine mit verhältnismäßig flachen Behandlungsbehältern und Fig. 6 schließlich ein Detail einer Variante dazu.

Gemäß Fig. 1 wird das Material 1, insbesondere in Form eines Kuchens bzw. einer Bahn, zwischen den durchlässigen Endlosbändern 2 und 3 den Behältern 4 bis 6 zugeführt, wobei die Bänder 2,3 mit dem Material 1 in Wellen, Schlaufen od.dgl. um diese Behälter von unten her entlang deren Flanken 7 bis 12 vermittels der Walzen 13 bis 19 geleitet werden. Für die Rückführung der Bänder 2,3 sind noch weitere Walzen 20 bis 25 bzw. 24' sowie die Walzen 26 bis 29 bzw. 26' vorgesehen. Anstelle der Walzen 15,17 und 19 können auch, wie Fig. 2 ausschnittsweise zeigt, Walzenpaare bzw. Preßnips 30,31 in die Anlage eingebaut werden. Die die Behälter, die Walzen usw. tragende Gerüstkonstruktion ist mit 32 bezeichnet.

Die Flanken 7 bis 12 der Behälter besitzen Öffnungen, durch welche unter Druck die Behandlungsflüssigkeit, insbesondere das Waschwasser, zu den Bändern und zum Material gelangt, was durch die Pfeile 33 bis 38 angedeutet ist. Im vorliegenden Fall wird die Behandlungsflüssigkeit in schmale Behälter 39 bis 44 eingebracht.

Wichtig ist, daß die Behandlungs- bzw. Waschzonen an den perforierten Flanken 7 bis 12 mit dazwischengeschalteten bzw. flankierenden Preßzonen 13 bis 19 bzw. 30,31 (Walzen, Preßwalzen, Preßnips) abwechseln.

Die durch die Bänder bzw. das Material hindurchgelangte bzw. hindurchgedrückte Behandlungsflüssigkeit wird in den Behältern 45 bis 50 aufgefangen und möglichst wieder genutzt, insbesondere in die Behälter 39 bis 44 rückgepumpt.

Beim dargestellten Doppelsiebwäscher wird also das Waschwasser mit Hilfe von mehr oder minder unter Druck stehenden Behältern (Waschschuhen) 7 bis 12 durch das Material 1 gepreßt. Der Einsatz von Druck ist von der Energieseite her wesentlich günstiger als der von Vakuum; außerdem wird bei Druckanwendung die Friktion der Bänder 2,3 mit den Behältern 7 bis 12 durch den Durchdringinngswiderstand des Waschwassers durch das Material weitgehend aufgehoben, wogegen beim Einsatz von Vakuum diese Friktion erhöht wird. Die höhere Friktion bei Vakuumlangsiebwäschern erfordert übrigens den Einsatz von speziellen Sieben bzw. Metallbändern.

Wie die Fig. 3 und 4 in schematischen Teilansichten erkennen lassen, sind außer den in Fig. 1 gezeigten etwas keilförmigen Behälterformen auch solche mit etwa rechteckigem Querschnitt 51 oder mit U-förmigem Querschnitt 52 denkbar, wobei in einem Fall die Behälteröffnungen 53 nur an den Behälterflanken, im anderen Fall die Öffnungen 54 auch am Boden vorhanden sein können.

Nochmals auf Fig. 1 zurückkommend wird darauf hingewiesen, daß das behandelte Material, z.B. der gewaschene Stoff, bei 55 die Maschine verläßt.

Durch vertikale oder schräge Anordnung der einzelnen Waschzonen beim Doppelsiebwäscher ist es also leicht möglich, zwischen jeder Waschzone eine Auspreßzone, die aus einer Bandflächenpressung 15,17 bzw. einer oder mehreren S-Walzen oder einer Nippressung d.h. einem oder mehreren Preßnips 30,31 besteht, anzuordnen; dies gilt auch für die Ausbildungen nach Fig. 3 und Fig. 4, wo Preßnips 56,57 bzw. 58,59 bzw. Preßwalzen 60 eingebaut sind. Durch die Kombination von Verdrängungswäsche und Auspressen wird der Gesamtwirkungsgrad des Waschvorganges erhöht und der erforderliche Frischwassereinsatz (Verdünnungsfaktor) auf ein Minimum reduziert. Die Reduktion des Frischwassereinsatzes hat große wirtschaftliche Bedeutung für die nachgeschalteten Eindampfanlagen für die ausgewaschenen Stoffe. Durch die kompakte Bauweise und die reduzierte Bandreibung in den Waschzonen bietet es sich auch an, im Anschluß an die Wäsche durch Anordnung weiterer Behandlungsbehälter weitere Behandlungsmedien, z.B. Bleichchemikalien, in das Material einzubringen.

Die Entwässerung des Materials 1 beginnt also in einer Vorentwässerungszone 61 auf dem bzw. am rücklaufenden Trum des Unterbandes 3. Im Anschluß an die Vorentwässerungszone ist ein Entwässerungsschuh 62 angeordnet, der das Material 1 z.B. auf etwa 10 bis 40, insbesondere auf etwa 12 %, vorentwässert. Nach dieser Entwässerungszone sind ein oder mehrere vertikale 63,64 bzw. 65,66 oder schräge Behandlungsbehälter (Waschschuhe) 7 bis 12 angeordnet, wobei an jedem Waschschuh bzw. zwischen den Waschschuhen sich eine oder mehrere Umlenkwalzen bzw. Preßnips befinden. Das Waschwasser wird wie erwähnt in unterhalb der Waschzonen befindlichen weiteren Behältern aufgefangen, die gleich als Pumpenvorlage für die Beschickung der einzelnen Waschzonen im Gegenstromverfahren dienen. Das behandelte Material 1 wird in der Austrittseite einer Austrageinrichtung 67 zugeführt.

Es können noch eine oder mehrere zusätzliche Behandlungszonen angeordneten werden, die nach Durchführung des Waschvorganges für die Einbringung von Chemikalien, z.B. für die Bleiche, des Materials Verwendung finden.

Wie die Fig. 5 zeigt, können die Behandlungsbehälter 68,69 auch mit geringer Tiefe, d.h. also sehr flach bzw. mit wenig gekrümmten Böden 70,71 ausgeführt werden, wobei die Öffnungen 72,73 für die unter Druck austretende Behandlungsflüssigkeit durch Pfeile angedeutet sind und über den gesamten Boden verteilt sind. An den Behälterseiten und zwischen den Behältern 68,69 sind wieder Umlenk- bzw. Preßwalzen 74,75 vorgesehen, so daß auch bei dieser Ausbildung die Bänder mit dem dazwischen befindlichen Material wellenförmig geführt werden, u.zw. durch Waschzonen 70,71 od.dgl. und Auspreßzonen 74,75. Die Bänder sind hier mit 76 und 77 bezeichnet.

Wie die Fig. 6 auszugsweise schematisch andeutet, können in den Preßzonen auch Preßnips 78,79 vorgesehen werden. Das Material ist mit 80 bezeichnet.

Der Druck in den Behältern kann nicht nur mit Hilfe von Pumpen, sondern auch statisch erzeugt werden, z.B. durch eine genügend hohe Säule der Behandlungsflüssigkeit im Behälter bei entsprechend dazu abgestimmten Ausströmöffnungen.

In den gezeigten Darstellungen sind die Behandlungsbehälter auf gleicher Höhe im Abstand voneinander und in Bewegungsrichtung der Bänder und des Materials hintereinander angeordnet. Die Behälter nach Fig. 1 können freie Innenräume 81,82 und 83 aufweisen, wodurch das Gewicht herabgesetzt wird. Es können aber auch in der Mitte geteilte Innenräume vorhanden sein, aus denen die Öffnungen in den Flanken gespeist werden.

## Patentansprüche

1. Einrichtung zur Behandlung einer zwischen mindestens zwei endlosen Siebbändern (2,3) od.dgl. geführten Materialbahn (1), wobei das Material (1) zwischen den Bändern (2,3) an in der Bewegungsrichtung der Bänder hintereinander, im Abstand voneinander nur oberhalb der Bänder angeordneten, das obere Band kontaktierenden, der Zufuhr einer Behandlungsflüssigkeit unter Druck dienenden, feststehenden, mit Öffnungen für die Behandlungsflüssigkeit versehenen Behältern (4-6) entlanggeleitet ist und wobei das Material (1) nach Passieren der Behälter zu Preßwalzen befördert ist, dadurch gekennzeichnet, daß die Bänder mit der dazwischen befindlichen Materialbahn in zumindest zwei nebeneinander befindlichen Schleifen durch mehrere Zonen geführt sind, in denen den Bändern (2,3) und dem Material (1) aus mindestens zwei nur oberhalb dieser Bänder angeordneten, feststehenden Druckbehältern (4-6) mittels mit Öffnungen versehenen, das obere Band, insbesondere bis zum oberen Behälterrand, kontaktierenden Seitenwänden (7-12), die mittels ihrer Außenflächen die aus Bändern und dazwischen befindlichem Material gebildeten Schleifen führen und die im Bereich des Bandkontakts Abströmöffnungen aufweisen, von oben die Behandlungsflüssigkeit durch diese Seitenwände unter Druck zugeleitet ist und in denen unterhalb des unteren Bandes dieser mittels der Seitenwand-Außenflächen geführten Mehrfachschleifen im wesentlichen normaler Luftdruck bzw. Atmosphärendruck bzw. Umgebungsdruck herrscht, und in welchen Zonen hierauf Bänder und Material durch im Abstand von den mindestens zwei Druckbehältern und unmittelbar zwischen diesen sowie getrennt von diesen gelagerte Umlenkwalzen bzw. Preßwalzen (15,17,19,30,31) od.dgl. gebildete Auspreßzonen geführt sind.

2. Einrichtung nach Anspruch 1, dadurch gekennzeichnet, daß die Siebbänder (2,3) mit dem von diesen geführten Material (1) zusätzlich mit den gelochten Seitenwänden verbundene, mit Öffnungen (72,73) versehene Böden (70,71) der Druckbehälter kontaktieren.

3. Einrichtung nach Anspruch 1 oder 2, dadurch gekennzeichnet, daß die Bänder (2,3) mit dem dazwischen befindlichen Material (1) durch die Zonen mit Druck von oben und normalem Luftdruck von unten in etwa horizontalen Schleifen, Schlingen, Schlaufen bzw. Wellen geführt sind, wobei zumindest zwei dieser Schleifen einzeln um zumindest zwei feststehende Druckbehälter (4-6) von unten und über zumindest eine Umlenkwalze (15,17,19,60,74), Preßwalze, durch Preßnips (30,31,56-59,78,79) od.dgl. geführt sind, die zwischen diesen Behältern angeordnet sind.

4. Einrichtung nach einem der Ansprüche 1 bis 3, dadurch gekennzeichnet, daß die Bänder (2,3) mit dem Material (1) an den Seitenwänden von im Verhältnis zur in der Bandbewegungsrichtung gemessenen Breite tiefen Druckbehältern (4-6,63-66) entlanggeleitet und mittels dieser Seitenwände geführt sind, die in diesem Bereich Öffnungen für den Austritt der unter Druck stehenden Behandlungsflüssigkeit aufweisen.

5. Einrichtung nach einem der Ansprüche 1 bis 4, dadurch gekennzeichnet, daß die Seitenwände der Druckbehälter (4-6,68,69) konvex nach außen gebogen sind.

6. Einrichtung nach einem der Ansprüche 1 bis 5, dadurch gekennzeichnet, daß die Bänder (2,3) mit dem Material (1) mittels der gesamten in der Bewegungsrichtung der Bänder verlaufenden, beispielsweise konvex, nach unten gekrümmten, den Behälterboden und die Behälterseitenwände bildenden Wand (70,71) feststehender Druckbehälter (68,69) mit im Verhältnis zur in Richtung der Band- bzw. Materialbewegung gemessenen Breite geringer Höhe geführt sind, wobei diese gesamte Wand in diesem Führungsbereich Öffnungen (72,73) für den Austritt der unter Druck stehenden Behandlungsflüssigkeit aufweist (Fig. 5,6).

7. Einrichtung nach einem der Ansprüche 1 bis 6, dadurch gekennzeichnet, daß der Querschnitt der in gleicher Höhe hintereinander angeordneten feststehenden Druckbehälter (4-6,68,69), insbesondere stetig, von oben nach unten abnimmt.

8. Einrichtung nach Anspruch 7, dadurch gekennzeichnet, daß die Behälterwände (7-12) die Gestalt eines an der Schneide abgeschnittenen Keiles, gegebenenfalls mit gekrümmten Flanken, aufweisen.

9. Einrichtung nach einem der Ansprüche 1 bis 8, dadurch gekennzeichnet, daß die Druckbehälter etwa in der Mitte geteilte Innenräume haben und im untersten, insbesondere flachen, Teil geschlossen ausgebildet sind.

10. Einrichtung nach einem der Ansprüche 1 bis 9, dadurch gekennzeichnet, daß die Druckbehälter (4-6) nur innerhalb ihrer Flanken Räume (39-44) für die Behandlungsflüssigkeit aufweisen, wobei diese Flanken die Öffnungen für die Behandlungsflüssigkeit besitzen.

11. Einrichtung nach einem der Ansprüche 1 bis 10, dadurch gekennzeichnet, daß die Bänder (2,3) mit dem zwischen ihnen befindlichen Material (1) im Bereich der Schleifen-, Schlingen- bzw. Wellen-Maxima um, gegebenenfalls angetriebene, pressende Umlenkwalzen (15,17,19) od.dgl. bzw. durch, gegebenenfalls angetriebene, Preßnips (30,31,56-59) od.dgl. geführt sind.

12. Einrichtung nach einem der Ansprüche 1 bis 11, dadurch gekennzeichnet, daß die Bänder (2,3) mit dem zwischen ihnen befindlichen Material (1) im Bereich der Schleifen-, Schlingen- bzw. Wellen-Minima um, gegebenenfalls angetriebene, pressende Umlenkwalzen (14,16,18) od.dgl. bzw. durch, gegebenenfalls angetriebene, Preßnips od.dgl. geführt sind.

13. Einrichtung nach einem der Ansprüche 1 bis 11, dadurch gekennzeichnet, daß unterhalb der Seitenwände der Druckbehälter (4-6) oben offene, insbesondere getrennte, Auffangwannen (45-50) od.dgl. für Behandlungsflüssigkeit, Waschflüssigkeit od.dgl., angeordnet sind.

## Claims

1. Apparatus or device for the treatment of a web of material (1) guided between at least two endless screen belts (2,3) or the like, the material (1) being passed between the belts (2,3) along containers (4-6) provided with openings for the treatment liquid, arranged above the belts only, one behind the other in the travel direction of the belts, spaced from each other, contacting the upper belt, serving the supply of a pressurized treatment liquid, the material (1) being conveyed to compression rollers after passing the containers, characterized in that the belts with the web of material lodged therebetween are passed through several zones in at least two loops next to each other, in which zones the treatment liquid is fed to the belts (2,3) and the material (1) from the top from at least two stationary pressurized containers (4-6) arranged above these belts only, by means of sidewalls (7-12) provided with openings and contacting the upper belt in particular to the upper edge of the container, which sidewalls guide the loops formed by belts and material lodged therebetween by means of their exterior surfaces and are provided with outlet openings in the area of contact with the belt, and in which zones there is substantially normal air pressure or atmospheric pressure or ambient pressure below the lower belt of these multiple loops guided by the exterior surfaces of the sidewalls, and in which zones belts and material are subsequently guided through straining zones formed by the at least two pressurized containers and the reversing rollers and compression rollers (15,17,19,30,31), respectively, or the like supported at a distance directly between them and separately from them.

2. The apparatus according to claim 1, characterized in that the screen belts (2,3) with the material (1) guided by them additionally contact bottoms (70, 71) of the pressurized containers, which bottoms are connected to the perforated sidewalls and are provided with openings (72,73).

3. The apparatus according to claim 1 or claim 2, characterized in that the belts (2,3) with the material (1) lodged therebetween are guided through the zones with pressure from above and normal air pressure from below in substantially horizontal loops or undulations, with at least two of these loops being guided individually around at least two stationary pressurized containers (4-6) from below and over at least one reversing roller (15,17,19,60,74), compression roller, through pressnips (30,31,56-59,78,79) or the like, which are arranged between these containers.

4. The apparatus according to any of claims 1 to 3, characterized in that the belts (2,3) with the material (1) are made to pass along the sidewalls of pressurized containers (4-6,63-66) being deep in proportion to their width as measured in the travel direction of the belt and are guided by these sidewalls, which are provided with openings for the discharge of the pressurized treatment liquid in this area.

5. The apparatus according to any of claims 1 to 4, characterized in that the sidewalls of the pressurized containers (4-6, 68, 69) are convexly outwardly curved.

6. The apparatus according to any of claims 1 to 5, characterized in that the belts (2,3) with the material (1) are guided by the whole wall (70,71) of stationary pressurized containers (68, 69) of low height if compared to the width as measured in the travel direction of the belts and material, respectively, extending in the travel direction of the belts, e.g. convexly, curved downwardly, forming the bottom of the container and the sidewalls of the container, this whole wall being provided with openings (72,73) for the discharge of the pressurized treatment liquid in this guiding area (Figs. 5,6).

7. The apparatus according to any of claims 1 to 6, characterized in that the cross section of the stationary pressurized containers (4-6,68,69) arranged one behind the other at the same level decreases, in particular constantly, from top to bottom.

8. The apparatus according to claim 7, characterized in that the container walls (7-12) have the shape of a wedge cut off at the edge, optionally with curved flanges.

9. The apparatus according to any of claims 1 to 8, characterized in that the pressurized containers have interior spaces divided approximately in the center and are formed closed in the lowermost, in particular flat, portion.

10. The apparatus according to any of claims 1 to 9, characterized in that the pressurized containers (4-6) have spaces (39-44) for the treatment liquid inside their flanges only, these flanges being provided with the openings for the treatment liquid.

11. The apparatus according to any of claims 1 to 10, characterized in that the belts (2,3) with the material (1) lodged therebetween are guided around optionally driven pressing reversing rollers (15,17,19) or the like and by optionally driven press nips (30,31,56-59) or the like, respectively, in the area of the maxima of the loops or undulations.

12. The apparatus according to any of claims 1 to 11, characterized in that the belts (2,3) with the material (1) lodged therebetween are guided around optionally driven pressing reversing rollers (14,16,18) or the like and by optionally driven press nips or the like, respectively, in the area of the minima of the loops or undulations.

13. The apparatus according to any of claims 1 to 11, characterized in that collecting vats (45-50) or the like that are open on the top, in particular separate, for treatment liquid, washing liquid or the like are provided underneath the sidewalls of the pressurized containers (4-6).

## Revendications

1. Dispositif pour le traitement d'une nappe de tissus (1) guidée entre au moins deux bandes à tamis (2,3) sans fin etc., le tissu (1) étant conduit entre les bandes (2,3) le long de récipients (4-6) pourvus d'orifices pour le liquide de traitement, arrangés seulement au-dessus des bandes, l'un derrière l'autre, en direction de mouvement des bandes, avec des distances entre eux, en contact avec la bande supérieure, servant d'apport d'un liquide de traitement sous pression, le tissu (1) étant transporté à des rouleaux compresseurs après avoir passé par les récipients, charactérisé en ce que les bandes avec la nappe de tissus entre elles sont guidées à travers plusieurs zones en au moins deux lacets l'un à coté de l'autre, dans lesquelles le liquide de traitement est alimenté aux bandes (2,3) et au tissu (1) de haut d'au moins deux récipients immobiles (4-6) soumis à pression, arrangés seulement au-dessus de ces bandes, au moyen de parois latéraux (7-12) pourvues d'orifices et en contact avec la bande supérieure en particulier jusqu'au bord supérieur du récipient, quelles parois latéraux guident les lacets formés par des bandes et le tissu entre elles au moyen de leurs faces extérieures et sont pourvues d'orifices d'échappement dans le domaine de contact avec la bande, et dans lesquelles il y a essentiellement une pression d'air normale ou pression atmosphérique ou pression ambiante au-dessous de la bande inférieure de ces lacets multiples guidés au moyen des faces extérieures des parois latéraux, et dans quelles zones les bandes et le tissu sont ensuite guidés à travers de zones de pression formées par les au moins deux récipients soumis à pression et les rouleaux de renversement ou bien rouleaux compresseurs (15,17,19,30,31) etc. logés à une distance directement entre eux et séparés d'eux.

2. Dispositif selon la revendication 1, characterisé en ce que les bandes à tamis (2,3) avec le tissu (1) guidé par elles de plus sont en contact avec les fonds (70,71) des récipients soumis à pression, quels fonds sont liés avec les parois latéraux perforées et sont pourvus d'orifices (72,73).

3. Dispositif selon la revendication 1 ou 2, characterisé en ce que les bandes (2,3) avec le tissu (1) entre elles sont guidées à travers les zones avec pression de haut et pression d'air normale d'en bas, en lacets, boucles ou bien ondulations essentiellement horizontaux, au moins deux de ces lacets étant guidés individuellement autour d'au moins deux récipients immobiles (4-6) soumis à pression d'en bas et sur au moins un rouleau de renversement (15,17,19,60,74), rouleau de pression, à travers de pressnips (30,31,56-59,78,79) etc., qui sont arrangés entre ces récipients.

4. Dispositif selon l'une des revendications 1 à 3, characterisé en ce que les bandes (2,3) avec le tissu (1) entre elles sont conduites le long des parois latéraux des récipients (4-6,63-66) soumis à pression, récipients profonds en proportion de leur largeur mesurée en direction de mouvement de la bande, et sont guidées par ces parois latéraux, qui sont pourvues d'orifices pour la sortie du liquide de traitement sous pression dans ce domaine.

5. Dispositif selon l'une des revendications 1 à 4, characterisé en ce que les parois latéraux des récipients (4-6,68,69) soumis à pression sont arquées convexement vers l'extérieur.

6. Dispositif selon l'une des revendications 1 à 5, characterisé en ce que les bandes (2,3) avec le tissu (1) sont guidées par la paroi (70,71) totale des récipients immobiles (68,69) soumis à pression d'une profondeur faible en comparaison avec la largeur mesurée en direction de mouvement des bandes ou bien du tissu, paroi qui s'étende en direction de mouvement des bandes, par exemple convexement, arquée ver le bas, formant le fond du récipient et les parois latéraux du récipient, toute cette paroi étant pourvue d'orifices (72,73) pour la sortie du liquide de traitement sous pression dans ce domaine de guidage (figs. 5,6).

7. Dispositif selon l'une des revendications 1 à 6, characterisé en ce que la section transversale des récipients (4-6,68,69) immobiles soumis à pression, arrangés l'un derrière l'autre au meme niveau, décroit, en particulier de façon constante, de haut en bas.

8. Dispositif selon la revendiction 7, characterisé en ce que les parois (7-12) des récipients prennent la forme d'une clavette découpée au tranchant, le cas échéant avec des flancs arqués.

9. Dispositif selon l'une des revendications 1 à 8, characterisé en ce que les récipients soumis à pression ont des intérieurs séparés au milieu ou presque et sont formés fermés dans la partie la plus bas, en particulier plate.

10. Dispositif selon l'une des revendications 1 à 9, characterisé en ce que les récipients (4-6) ont des espaces (39-40) pour le liquide de traitement seulement à l'intérieur de leurs flancs, ces flancs étant pourvus d'orifices pour le liquide de traitement.

11. Dispositif selon l'une des revendications 1 à 10, characterisé en ce que les bandes (2,3) avec le tissu (1) entre elles sont guidées autour de rouleaux de renversement (15,17,19) pressants etc., qui, le cas échéant, sont actionnés, ou bien par des pressnips (30,31,56-59) etc., qui, le cas échéant, sont actionnés, dans le domaine des maxima des lacets, boucles ou bien ondulations.

12. Dispositif selon l'une des revendications 1 à 11, characterisé en ce que les bandes (2,3) avec le tissu (1) entre eux sont guidées autour de rouleaux de renversement (14,16,18) pressants etc., qui, le cas échéant, sont actionnés, ou bien par des pressnips etc., qui, le cas échéant, sont actionnés, dans le domaine des minima des lacets, boucles ou bien ondulations.

13. Dispositif selon l'une des revendications 1 à 11, characterisé en ce que des collecteurs (45-50) etc., ouverts en haut, en particulier séparés, pour le liquide de traitement, liquide laveur etc. sont placés au-dessous des parois latéraux des récipients (4-6) soumis à pression.
